# EUROPEAN PATENT APPLICATION

(11) **EP 1 720 237 A1**
(43) Date of publication of application: **08.11.2006**
(21) Application number: 05009834.2
(22) Date of filing: 04.05.2005
(51) Int. Cl.: H02M 3/07

(54) **Circuit and method for reducing a supply voltage**

(71) Applicant: Harman Becker Automotive Systems GmbH, 76307 Karlsbad (DE)
(72) Inventor: Jurzitza, Dieter, 76131 Karlsruhe (DE)
(74) Representative: Grünecker, Kinkeldey, Stockmair & Schwanhäusser Anwaltssozietät

(57) **Abstract**

The present invention relates to a circuit and method for reducing a supply voltage, said circuit comprising a ground terminal defining a ground potential (U0), an input terminal for receiving a first voltage (U1) with respect to the ground potential (U0), an output terminal for providing a second voltage (U2) with respect to the ground potential (U0), said second voltage (U2) being reduced with respect to the first voltage (U1), a first capacitive element (C1) connected between the output terminal and the ground terminal and a second capacitive element (C2). So as to obtain a circuit having an efficiency coefficient higher than that of a linear voltage regulator and lower production costs than a switch mode power supply, the circuit according to the present invention comprises a switching network (M1, M2, D1, D2) adapted to switch the first and second capacitive elements (C1, C2) in series between the input terminal and the ground terminal, a first electrode of said second capacitive element (C2) being connected to the input terminal during a first switching state, and to switch the first and second capacitive elements (C1, C2) in parallel between the output terminal and the ground terminal, said first electrode of said second capacitive element (C2) being connected to the output terminal during a second switching state.

## Description

The present invention relates to a circuit arrangement for reducing a supply voltage, comprising a ground terminal defining a ground potential, an input terminal for receiving a first voltage with respect to the ground potential and an output terminal for providing a second voltage with respect to the ground potential, said second voltage being reduced with respect to the first voltage. This circuit further comprises a first capacitive element, connected between the output terminal and the ground terminal, and a second capacitive element. A supply voltage is reduced using simple semiconductor elements and switching elements.

The operation of a circuit or device requires a supply voltage be applied. In particular, almost all electronic devices, such as TV sets or computers, comprise a switch mode power supply. Battery-operated devices also comprise a switch mode power supply so as to maintain the internal battery voltage constant independently from the battery charging level, or to reduce or increase the battery voltage.

A switch mode power supply can be used in an electronic device for reducing an input voltage so as to generate a voltage that can be used to operate a digital electronic device. An automobile comprises a large amount of such electronic devices that are to be powered using an on-board supply voltage of 12 Volts. However, the circuit elements and digital electronic modules embedded in an automobile require a lower supply voltage, e.g. 3,3 Volts. So as to provide this lower supply voltage, the on-board power supply voltage has to be reduced from 12 Volts to 3,3 Volts.

A particular switch mode power supply known in the art fulfilling this function of reducing a power supply voltage is a so-called step-down-converter. Such a switch mode power supply can reduce an input power supply with a high efficiency coefficient. However, this circuit arrangement generates high interference, thus leading to electromagnetic compatibility problems. Furthermore, this circuit arrangement has high production costs.

Alternatively, another type of circuit arrangement known in the art can be used to reduce a supply voltage. This circuit arrangement, known as a linear voltage regulator, has low production costs and does not engender electromagnetic interferences, thus leading to a very good electromagnetic compatibility. However, a linear voltage regulator operates with a very low efficiency coefficient, especially when the difference between the input and output voltage is large.

The object of the present invention is therefore to provide a circuit arrangement and a method for reducing a supply voltage with a high efficiency and low production costs.

This object is achieved by a circuit for reducing a supply voltage comprising a switching network adapted to switch the first and second capacitive elements in series between the input terminal and the ground terminal, a first electrode of said second capacitive element being connected to the input terminal during a first switching state, and to switch the first and second capacitive elements in parallel between the output terminal and the ground terminal, said first electrode of said second capacitive element being connected to the output terminal during a second switching state. This object is also achieved by a corresponding method.

Preferred embodiments are subject matter of the dependent claims.

Since the capacitive elements are switched in series between the input terminal and the ground terminal, a first electrode of the second capacitive element being connected to the input terminal during a first switching state, both capacitive elements are charged under the first voltage applied between the input terminal and the ground terminal. Hence, a reduced voltage appears on the first capacitive element, between the output terminal and the ground terminal.

During a second switching state, the capacitive elements are switched in parallel between the output terminal and the ground terminal, said first electrode of said second capacitive element being connected to the output terminal during said second switching state. As a result, both capacitive elements buffer a reduced voltage during the second switching state, in which the capacitive elements are not charged anymore under the input voltage. Therefore, the capacitive energy stored in the first switching state can be liberated during the second switching state to e.g. a load placed at the output of the circuit.

According to a preferred embodiment of the present invention, the output terminal providing the reduced voltage is connected to a linear voltage regulator comprising an output terminal for delivering a further reduced voltage. Hence, a supply voltage can be roughly halved using a suitable circuit arrangement comprising only switching elements and capacitive elements. This pre-divider has a high efficiency coefficient, which value is in the order of eighty percent. Thus, only little heat is generated by the circuit arrangement, which is particularly advantageous when this circuit arrangement is embedded in an automobile, where the thermal problems are particularly critical.

By connecting the output terminal delivering the reduced voltage to a linear voltage regulator, such as a low-drop voltage regulator, a further reduced supply voltage can be provided that allows supplying e.g. a digital electronic module.

Furthermore, combining a clocked pre-divider according to the present invention with a downstream voltage regulator has the advantage of generating less heat than a voltage regulator implemented alone and leading to a reduced circuit complexity in comparison to a conventional switch mode power supply, thus reducing production costs.

According to a preferred embodiment of the present invention, the switching network comprises a first and second switching element and a first and second rectifier element that let a current pass only in one direction. Such a switching network allows for alternatively switching the first and second capacitive element in series in a first switching state, and in parallel in a second switching state.

Even though such a switching network comprises two switching elements, whereas a conventional step-down-converter comprises only one switching element, the circuit arrangement according to the present invention allows to eliminate the need for a choking coil, normally present in a step-down-converter. Furthermore, the circuit arrangement according to the present invention allows for saving cooling elements that are normally compulsory in a circuit arrangement for reducing a supply voltage using a linear voltage regulator. This therefore results in a circuit arrangement having a reduced cost.

Since the first electrode of the second capacitive element is connected to a connecting point, located between the output of the first switching element and the input of the second switching element, the first electrode of the second capacitive element can therefore be connected alternatively to the input terminal, during the first switching state, and to the output terminal, during the second switching state.

When the second rectifier element is arranged in such a way that it lets a current pass from the second electrode of the second capacitive element to the first capacitive element, both capacitive elements can be charged under the input voltage during the first switching state.

Arranging the first rectifier element in such a way that it lets a current pass from the ground terminal to the second electrode of the second capacitive element allows to guarantee that when the second switching element is switched conductively, the current flowing through the second capacitive element can flow in the first capacitive element and in the downstream linear voltage regulator placed at the output of the circuit arrangement. In this case, the second rectifier element ensures that the first capacitive element is not short-circuited.

According to a preferred embodiment of the present invention, the switching elements are operated directly or using an additional switching element. An additional switching element can provide a switching voltage to either the first switching element or the second switching element, thus simplifying the control of the switching elements.

The switching elements may be one of switching transistors, electromagnetic relays or optocouplers. It is particularly advantageous to foresee the switching elements in the form of switching transistors that are switched using a switching current or a switching voltage provided by either mechanical or electronic switching elements.

The voltage supplied at the output of the circuit arrangement is roughly half of the input voltage applied to the input terminal of the circuit arrangement. However, connecting an electronic device at the output of the circuit arrangement is electrically equivalent to connecting a load at the output of the circuit arrangement, which leads to a further reduction of the generated reduced supply voltage.

Preferably, the capacitive elements are capacitors, whose values are chosen equal or roughly equal to one another.

The invention is elucidated by reference to an embodiment in conjunction with Figs. 1, 2, 3 and 4. Fig. 1 is a simplified circuit diagram explaining the working principle of the circuit arrangement for reducing a supply voltage according to the present invention. Fig. 2 is a diagram showing the switching states and current flows in the circuit for reducing a supply voltage according to the present invention. Fig 3 specifies the period of the repetitive switching process of switches M1, M2. Fig. 4 shows a circuit according to the present invention with a downstream linear voltage regulator and an output load.

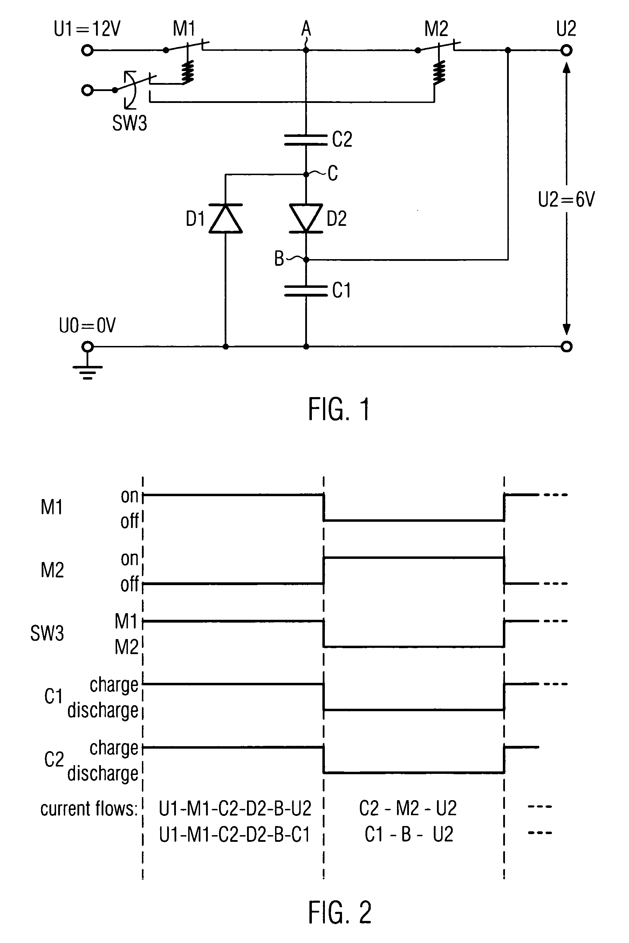

The circuit arrangement of Fig. 1 comprises an input terminal for receiving a supply voltage U1 and a ground terminal defining a ground potential U0. The input terminal receives a supply voltage U1 having a value of e.g. +12 Volts.

The supply voltage U1 is applied to a first switching element M1. The output of the first switching element M1 is connected to the input of a second switching element M2. The output of the second switching element M2 is connected with an output terminal, where a reduced voltage U2 with respect to the ground potential U0 is delivered.

A series connection comprising two capacitive elements C1, C2, preferentially capacitors, is connected between a connection point A, located between the output of the first switching element M1 and the input of the second switching element M2, and the ground terminal. A diode D2 is arranged between capacitors C1, C2, the second capacitor C2 being arranged between the connection point A and the diode D2. The diode D2 is arranged in such a way that a current can only flow from the second capacitor C2 to the first capacitor C1.

An additional diode D1 is connected between the ground terminal and a connection point C located between the second capacitor C2 and the diode D2. The diode D1 is arranged in such a way that a current can only flow from the ground terminal to the connection point C.

Furthermore, a connecting point B, located between the diode D2 and the first capacitor C1, is connected to the output terminal. Hence, the reduced supply voltage U2, delivered at the output terminal of the circuit arrangement according to the present invention, is also the voltage appearing between the two electrodes of first capacitor C1.

As can be seen in Fig. 2, the switching elements M1, M2 are switched on and off alternatively, in such a way that only one of the two switching elements M1, M2 is switched on, i.e. is in a conductive state, at a time.

When the switching element M1 is switched on, since the supply voltage U1 is applied between the input terminal and a ground terminal, a current flows through the first switching element M1 to the connection point A and then to the second capacitor C2, which is thus charged. Since the diode D2 is arranged so that only a current flowing from the second capacitor C2 to the first capacitor C1 can pass, the above-mentioned current can flow through the diode D2 and the first capacitor C1 is thus charged as well.

As a result, when the first switching element M1 is in a conductive state, the series connection of capacitors C1, C2 is charged under the supply voltage U1. A voltage appears between the electrodes of the first capacitor C1 that is a reduced voltage of the input voltage U1.

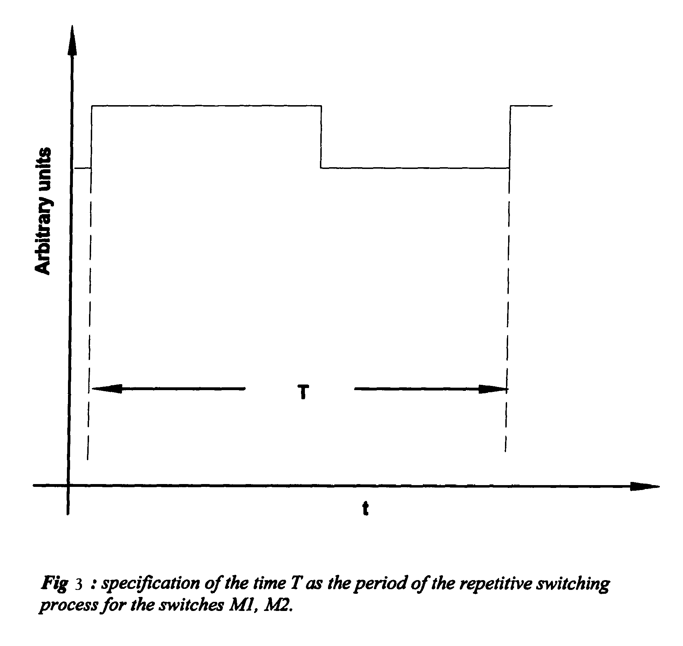

Preferably, the values of capacitors C1, C2 are chosen equal or roughly equal to one another. However, other capacitive ratios may be considered as well. Provided R_{L} * (C1*C2 / (C1 + C2)) >> T, wherein T is the time period of the repetitive switching process of switches M1, M2, as defined in Fig 3, the output voltage U2 will reach a value of nearly 50 % of U1.

When the second switching element M2 is in a conductive state, said first switching element M1 being then non-conductive, a current flows from the ground terminal through the diode D1, the second capacitor C2 and the second switching element M2 to the output terminal. Furthermore, since the diode D2 is polarized in the opposite direction, a current flows from the ground terminal through the first capacitor C1 to the output terminal.

As a result, the effect achieved when the second switching element M2 is switched on, is that capacitors C1, C2 both buffer the reduced supply voltage U2. Their respective charge accumulated during the period in which the first switching element M1 is switched conductively is liberated and flows through e.g. the internal load of an electronic device connected at the output terminal. When the second switching element M2 is in a conductive state, both capacitors C1, C2 are thus discharged in the output load, said charge being then regenerated during the following period, in which the first switching element M1 is in a conductive state.

When the second switching element M2 is in a conductive state, the capacitors C1, C2 are therefore switched in parallel to one another and both buffer the same reduced voltage U2. Indeed, the diode D2 located between the two capacitors C1, C2 does not let the current pass from first capacitor C1 to second capacitor C2. The diode D2 however, allows avoiding short-circuiting first capacitor C1. The diode D1 allows the current flowing though it to flow through the second capacitor C2 and the second switching element M2.

During the second switching state, in which the second switching element M2 is switched conductively, both capacitors C1, C2 buffer the reduced voltage U2 during a period, in which the capacitors C1, C2 are not charged under the input voltage U1 anymore, since no connection with the input terminal, on which the supply voltage U1 is applied, is possible.

When the second switching element M2 is opened and the first switching element M1 closed again, both capacitors C1, C2 are connected in series again. Thus, the supply voltage U1 is applied to the series connection of capacitors C1, C2, so that the charge which was liberated in the load located at the output terminal during the preceding second switching state, can now be regenerated in the capacitors C1, C2 during the first switching state, in which the first switching element M1 is switched conductively.

So as to alternatively switch the switching elements M1, M2 in a conductive state, it can be foreseen to implement an additional switching element SW3 that applies a voltage either to the first switching element M1 or to the second switching element M2.

The switching elements M1, M2 are preferentially foreseen in the form of switching transistors. However, the switching elements M1, M2 can also be construed in the form of electromagnetic relays or optocouplers. Other design possibilities are also included in the scope of protection, as long as the switching elements M1, M2 are switched alternatively on and off one at a time.

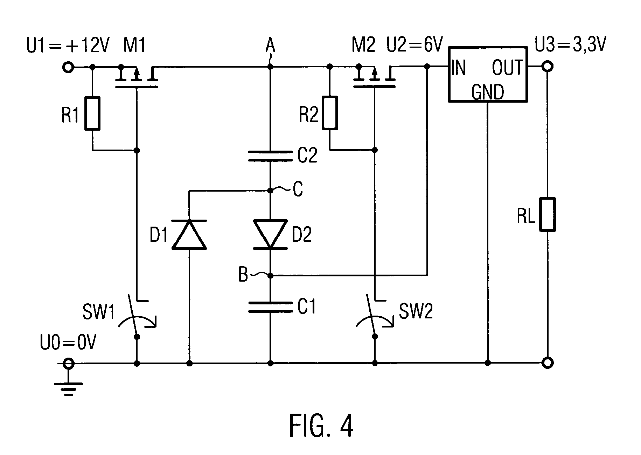

A preferred embodiment of the present invention is represented in Fig. 4, wherein only additional elements that are not represented in Fig. 1 will be explained in the following.

The switching elements M1, M2 are foreseen in the form of switching transistors. A resistance R1, R2 is arranged between the input for applying an input voltage and the gate input. The respective gate input of the switching transistors M1, M2 is connected to the ground terminal by switches SW1, SW2. Hence, the switching function is formed by combining mechanically or electronically controlled switching elements SW1, SW2 with a switching transistor M1, M2.

Still according to this preferred embodiment of the present invention, the output terminal that supplies the reduced supply voltage U2 is connected to the input of a linear voltage regulator U. The output of such a linear voltage regulator U delivers in tum a further reduced supply voltage U3. Hence, in case the supply voltage U1 of 12 Volts is reduced to a voltage U2 of e.g. 6 Volts after the pre-divider, the output of the linear voltage regulator U can provide a further reduced supply voltage of e.g. 3,3 Volts.

A load R_{L} representing the internal resistance of a digital electronic device is connected between the output terminal of the linear voltage regulator U delivering the reduced supply voltage U3 and the ground terminal. Connecting such a load R_{L} at the output of the linear voltage regulator U connected at the output of the pre-divider circuit arrangement delivering the reduced voltage U2 commonly leads to a reduction of the delivered voltage U2. In the present case, the voltage U2 provided at the output of the pre-divider has a value which is lower than the theoretical value of e.g. 6 Volts. This voltage drop-out is taken into account when designing the downstream linear voltage regulator U.

The circuit arrangement shown in Fig. 4, comprising a pre-divider circuit and a downstream linear voltage regulator U has the advantage of having a lower component count than a common switch mode power supply. Furthermore, the electromagnetic interferences generated by such a circuit arrangement are reduced in comparison to a standard switch mode power supply. Finally, the circuit arrangement for reducing a supply voltage according to the present invention has the advantage of eliminating the need for a choking coil and switch mode power supply integrated circuits that are normally part of a standard switch mode power supply.

The power loss generated in the form of heat by the circuit arrangement according to the present invention is reduced in comparison to the power dissipated in a conventional linear voltage regulator. This allows reducing the costs involved for cooling such circuit for reducing a supply voltage, eliminating for instance the need for a radiator. The reduced power dissipation of the circuit arrangement according to the present invention will be illustrated in the following.

The efficiency coefficients for three different circuit arrangements are calculated in the following. The power dissipation in a common switch mode power supply, a linear voltage regulator and the circuit arrangement according to the present invention are compared, assuming the output load R_{L} of a digital electronic module consumes a current of 0,4A at a voltage of U3 equal to 3,3 Volts, thus corresponding to an output power of 1,32W.

The input power of the common switch mode power supply is measured to be 1,65W, thus leading to an efficiency coefficient of eighty percent. This value is common for a switch mode power supply.

The efficiency coefficient of the linear voltage regulator depends on the difference between the input voltage and the output voltage. The input power is calculated to be 0,4A * 12V = 4,8W, thus leading to an efficiency factor of about 27,5 percent.

The circuit arrangement of the present invention, comprising the pre-divider and the downstream linear voltage regulator, is measured to have an input current of 0,22 A. Therefore, the input power is calculated to be 0,22 * 12 V = 2,65W, leading to a corresponding efficiency coefficient of fifty percent. The value of 0,22 A, about half of the output current is determined through experiments. Ideally, the input current would be exactly fifty percent of the output current.

In the circuit arrangement according to the present invention, the power losses in the linear voltage regulator drop by about 2W. This corresponds to about fourty-five percent less power dissipated in heat. This thermal aspect is particularly important, especially when the circuit arrangement is designed to be implemented in an automobile.

In the circuit arrangement according to the present invention, an input supply voltage U1 is halved in the pre-divider, comprising only capacitors and switching elements. Only very little heat is generated in this part of the circuit arrangement, thus leading to an efficiency coefficient in the pre-divider in the order of eighty percent. The linear voltage regulator is connected downstream, at the output of the pre-divider to generate a further reduced voltage U3.

## Claims

1. A circuit for reducing a supply voltage, comprising:
a ground terminal defining a ground potential (U0),
an input terminal for receiving a first voltage (U1) with respect to the ground potential (U0),
an output terminal for providing a second voltage (U2) with respect to the ground potential (U0), said second voltage (U2) being reduced with respect to the first voltage (U1),
a first capacitive element (C1) connected between the output terminal and the ground terminal,
a second capacitive element (C2), and
a switching network (M1, M2, D1, D2) adapted to switch the first and second capacitive elements (C1, C2) in series between the input terminal and the ground terminal, a first electrode of said second capacitive element (C2) being connected to said input terminal during a first switching state, and further adapted to switch the first and second capacitive elements (C1, C2) in parallel between the output terminal and the ground terminal, said first electrode of said second capacitive element (C2) being connected to said output terminal during a second switching state.

2. The circuit according to claim 1 further comprising a linear voltage regulator (U), wherein the output terminal providing the reduced voltage (U2) is connected to said linear voltage regulator (U) comprising an output terminal for providing a further reduced voltage (U3).

3. The circuit according to one of claims 1 to 2, wherein said switching network (M1, M2, D1, D2) comprises:
a first switching element (M1),
a second switching element (M2),
a first rectifier element (D1) for letting a current pass only in one direction, and
a second rectifier element (D2) for letting a current pass only in one direction.

4. The circuit according to claim 3, wherein said first switching element (M1) is adapted to be switched conductively in said first switching state and said second switching element (M2) is adapted to be switched conductively in said second switching state, so that said first and second switching element (M1, M2) are switched conductively one at a time.

5. The circuit according to one of claims 3 or 4, wherein said switching network (M1, M2, D1, D2) is arranged in such a way that said first rectifier element (D1) lets the current pass in said second switching state, and said second rectifier element (D2) lets the current pass in said first switching state.

6. The circuit according to one of claims 3 to 5, wherein the first electrode of said second capacitive element (C2) is connected to a connecting point (A), located between the output of said first switching element (M1) and the input of said second switching element (M2).

7. The circuit according to one of claims 3 to 6, wherein said second rectifier element (D2) is arranged in such a way that it lets a current pass from a second electrode of said second capacitive element (C2) to said first capacitive element (C1).

8. The circuit according to claim 7, wherein said first rectifier element (D1) is arranged in such a way that it lets a current pass from the ground terminal to said second electrode of said second capacitive element (C2).

9. The circuit according to one of claims 3 to 8, wherein said first rectifier element (D1) and second rectifier element (D2) are diodes.

10. The circuit according to one of claims 3 to 9, wherein said switching elements (M1, M2) are one of switching transistors, electromagnetic relays or optocouplers.

11. The circuit according to claim 10, wherein said switching elements (M1, M2) are switching transistors and a resistive element, preferentially a resistance (R1, R2), is connected between the input applying the first voltage (U1) and the gate input of said switching transistors (M1, M2).

12. The circuit according to one of claims 3 to 11, wherein the switching elements (M1, M2) are operated directly or using an additional switching element (SW1, SW2, SW3).

13. The circuit according to one of claims 1 to 12, wherein said first and second capacitive elements (C1, C2), preferentially capacitors, have an equal or roughly equal value.

14. Method for reducing a supply voltage in a circuit comprising a ground terminal defining a ground potential (U0), an input terminal for receiving a first voltage (U1) with respect to the ground potential (U0), and an output terminal for providing a second voltage (U2) with respect to the ground potential (U0), said second voltage (U2) being reduced with respect to the first voltage (U1), said method comprising the following steps:
connecting a first capacitive element (C1) between the output terminal and the ground terminal, and
arranging a switching network (M1, M2, D1, D2) in said circuit so that it switches a second capacitive element (C2) and said first capacitive element (C1) in series between the input terminal and the ground terminal, a first electrode of said second capacitive element (C2) being connected to said input terminal during a first switching state, and so that it switches said first and second capacitive elements (C1, C2) in parallel between the output terminal and the ground terminal, said first electrode of said second capacitive element (C2) being connected to said output terminal during a second switching state.

15. The method according to claim 14, wherein said switching network (M1, M2, D1, D2) comprises a first switching element (M1), a second switching element (M2), a first rectifier element (D1) for letting a current pass only in one direction, and a second rectifier element (D2) for letting a current pass only in one direction, said step of arranging said switching network (M1, M2, D1, D2) comprising:
arranging said first switching element (M1) so that it is switched conductively in said first switching state and said second switching element (M2) so that it is switched conductively in said second switching state.

16. The method according to claim 15, wherein said step of arranging said switching network (M1, M2, D1, D2) further comprises arranging said first rectifier element (D1) so that it lets the current pass in said second switching state, and said second rectifier element (D2) so that it lets the current pass in said first switching state.

17. The method according to one of claims 15 or 16, wherein said step of arranging said switching network (M1, M2, D1, D2) further comprises connecting the first electrode of said second capacitive element (C2) to a connecting point (A), located between the output of said first switching element (M1) and the input of said second switching element (M2).

18. The method according to one of claims 15 to 17, wherein said step of arranging said switching network (M1, M2, D1, D2) further comprises arranging said second rectifier element (D2) in such a way that it lets a current pass from a second electrode of said second capacitive element (C2) to said first capacitive element (C1).

19. The method according to claim 18, wherein said step of arranging said switching network (M1, M2, D1, D2) further comprises arranging said first rectifier element (D1) in such a way that it lets a current pass from the ground terminal to said second electrode of said second capacitive element (C2).

20. The method according to one of claims 14 to 19, further comprising connecting the output terminal providing the reduced voltage (U2) to a linear voltage regulator (U) comprising an output terminal for providing a further reduced voltage (U3).
